# EUROPÄISCHE PATENTSCHRIFT

(11) **EP 3 773 973 B1**
(45) Veröffentlichungstag und Bekanntmachung des Hinweises auf die Patenterteilung: **29.03.2023**
(21) Anmeldenummer: 19718260.3
(22) Anmeldetag: 03.04.2019
(51) Int. Cl.: B01D 29/21

(54) **FILTERANORDNUNG SOWIE FILTERSCHNITTSTELLENEINHEIT**
FILTER ARRANGEMENT AND FILTER UNIT
ENSEMBLE DE FILTRAGE ET UNITÉ FILTRANTE

(30) Priorität: 04.04.2018 DE 102018002766
(43) Veröffentlichungstag der Anmeldung: 17.02.2021
(73) Patentinhaber: MANN+HUMMEL GmbH, 71636 Ludwigsburg (DE)
(72) Erfinder: MEIER, Alexander, 27603 Raleigh, North Carolina (US); SCHULZE, Michael, 67346 Speyer (DE); STARK, Dennis, 69256 Mauer (DE); NGUYEN, Duc Cuong, 30880 Laatzen (DE)
(74) Vertreter: Mann + Hummel Intellectual Property
(86) Internationale Anmeldenummer: PCT/EP2019/058337
(87) Internationale Veröffentlichungsnummer: WO 2019/193022

(56) Entgegenhaltungen:
- EP-A1- 2 228 116
- WO-A1-2006/055295
- US-A1- 2006 186 031
- US-B1- 9 707 502

## Beschreibung

### Technisches Gebiet

Die Erfindung betrifft eine Filteranordnung nach dem Oberbegriff des Anspruchs 1, ein Anschlussschnittstellenelement nach dem Oberbegriff des Anspruchs 8 sowie eine Filterschnittstelleneinheit nach dem Oberbegriff des Anspruchs 9.

### Stand der Technik

Aus dem Stand der Technik, beispielsweise aus der DE 20 2005 014 690 U1, sind Filter mit von innen nach außen durchströmten Filterelementen für Erodiermaschinen (EDM) bekannt. Erodiermaschinen sind Maschinen, welche im Werkzeugformenbau eingesetzt werden. Filter für Erodiermaschinen filtern die Prozessflüssigkeit oder das Dielektrikum, meist deionisiertes Wasser oder manchmal auch Erodieröl. Durch den Erodierprozess befinden sich im Dielektrikum Stahlpartikel, welche mittels Filter herausgefiltert werden. Das gereinigte Dielektrikum befindet sich in einem Kreislauf und wird dem Erodierprozess erneut zugeführt.

Die Filterelemente weisen meist hohlzylindrisch angeordnete, beispielsweise gewickelte oder sternförmig gefaltete Filtermedienanordnungen auf, die von innen nach außen durchströmt werden und mit Schmutz aus dem Erodierprozess beaufschlagt werden. Die Filterelemente sind bis zu einem maximal zulässigen Differenzdruck freigegeben und dürfen nicht über diesem betrieben werden, da dies zu diversen Fehlfunktionen führen kann. Im Falle einer Reklamation ist es wichtig, sowohl das Filterelement als auch die bisherigen Bedingungen, unter denen das Filterelement betrieben wurde, zurückverfolgen zu können. Diese Rückverfolgbarkeit ist beim Stand der Technik mittels einem aufgedruckten Fertigungsdatum und einem Werkecode des produzierenden Werks möglich. Eine Rückverfolgbarkeit der Betriebsbedingungen, unter denen der Filter betrieben wurde, ist nur mit weiterführenden Untersuchungen möglich.

Aus dem Bereich Öl- und Schmierstofffiltration mit Wechselfiltern sind Differenzdruckschalter, die eine etwaige Überschreitung des Differenzdrucks anzeigen, bekannt.

Aus der Druckschrift DE 10 2013 216 853 A1 ist ein Fluidfilterelement mit einem Drucksensor und einem Temperatursensor bekannt. Diese Sensoren sind an einer Endscheibe befestigt und als R[adio]F[requency]ID[entification]-Sensoren ausgebildet. Diese RFID-Sensoren benötigen eine Schnittstelle zwischen der R[adio[F[requenz]ID[entifi-kations]-Lesevorrichtung und dem R[adio[F[requenz]ID[entifikations]-Transponder, welche über größere Distanzen kommunizieren kann.

Die EP 1 844 836 A2 offenbart einen Filter mit einem R[adio]F[requency]ID[entification]-Drucksensor zur Messung eines transmembranen Differenzdruckes. Auch dieser RFID-Sensor benötigt eine Schnittstelle, welche über größere Distanzen kommunizieren kann. US 2006/186031 A1 und WO 2006/055295 A1 zeigen Filteranordnungen mit Anschlussmittel.

Der Erfindung liegt die Aufgabe zugrunde, eine Filteranordnung der eingangs genannten Art, ein Anschlussschnittstellenelement der eingangs genannten Art sowie eine Filterschnittstelleneinheit der eingangs genannten Art derart weiterzuentwickeln, dass diese einfach aufgebaut ist, wobei die Filteranordnung als Informationsträger dient.

Im Speziellen soll eine aus dem Stand der Technik bekannte Anschlussschnittstelle, die eigentlich dazu geeignet ist, das Dielektrikumzufuhranschlusselement der Erodiermaschine in einer beliebigen Winkelposition an die Filteranordnung anzuschließen, derart weitergebildet werden, dass eine winkeleindeutige Montage der Anschlussschnittstelle erfolgt.

### Offenbarung der Erfindung

Diese Aufgabe wird durch eine Filteranordnung mit den im Anspruch 1 angegebenen Merkmalen, sowie durch eine Filterschnittstelleneinheit mit den im Anspruch 8 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Mithin basiert die vorliegende Erfindung darauf, dass die Filteranordnung mindestens ein Adapterformschlusselement aufweist. Dieses Adapterformschlusselement der Filteranordnung ist dazu ausgebildet, den Anschluss der Filteranordnung an ein als Gegenstück zum Adapterformschlusselement der Filteranordnung ausgebildetes Adapterformschlusselement der Erodiermaschine zu ermöglichen. Um eine winkeleindeutige Montage des Dielektrikumzufuhranschlusselements der Erodiermaschine an die Filteranordnung zu ermöglichen, ist das Dielektrikumzufuhranschlusselement nur dann an die Filteranordnung anschließbar, wenn das Adapterformschlusselement der Filteranordnung und das Adapterformschlusselement der Erodiermaschine in Eingriff miteinander sind.

Die vorliegende Erfindung basiert insbesondere darauf, bei einer rotationssymmetrischen Anschlussschnittstelle mindestens ein der Filteranordnung zugeordnetes Adapterformschlusselement und mindestens ein der Erodiermaschine zugeordnetes Adapterformschlusselement vorzusehen, wobei die Adapterformschlusselemente das Verschlieβen der Anschlussschnittstelle nur in einer definierten Winkelposition erlauben.

Mit anderen Worten ist das Adapterformschlusselement der Filteranordnung dazu ausgebildet, mit dem Adapterformschlusselement der Erodiermaschine derart zusammenzuwirken, dass das Verschließen der Adapterformschlusselemente nur in einer definierten Winkelposition der Adapterformschlusselemente erfolgen kann.

Das Adapterformschlusselement der Filteranordnung ist mit radialem Abstand zu einem Dielektrikumeinlass der Filteranordnung angeordnet. Das Adapterformschlusselement der Filteranordnung ist also exzentrisch zum Dielektrikumeinlass angeordnet. Die Angabe "radial" bezieht sich dabei auf die Längsachse der Filteranordnung. Das Adapterformschlusselement der Filteranordnung ist also exzentrisch zur Längsachse der Filteranordnung angeordnet.

Zum Anschließen eines Dielektrikumzufuhranschlusselements der Erodiermaschine weist der Dielektrikumeinlass der Filteranordnung mindestens ein axiales rotationssymmetrisches Anschlussmittel auf. Das axiale rotationssymmetrische Anschlussmittel des Dielektrikumeinlasses kann beispielsweise ein axialer Schlauchanschlussfortsatz, etwa mit Gewinde, sein.

Um als Informationsträger zu dienen, weist die Filteranordnung mindestens ein filterspezifische Daten enthaltendes Identifikationselement auf. Als filterspezifische Daten kann das Identifikationselement beispielsweise folgende Daten aufweisen:
- Fertigungsdatum und/oder Fertigungswerk der Filteranordnung und/oder
- Fertigungscharge des Filterelements oder anderer funktionsrelevanter Teile und/oder
- Datenblatt des Filterelements mit Kenndaten wie Nenn-Volumenstrom pro maximalem Differenzdruck und/oder
- Einbau-Anleitung für die Filteranordnung und/oder
- Anleitung für die Verwendung von Zusatzteilen wie etwa Griffen oder Ähnlichem.

Das Identifikationselement ist exzentrisch zum Dielektrikumeinlass angeordnet.

Das Identifikationselement kann beispielsweise als Q[uick]R[esponse]C[ode] ausgebildet sein oder mindestens einen Q[uick]R[esponse]C[ode] aufweisen.

Zusätzlich zu dem Q[uick]R[esponse]C[ode] oder alternativ zu dem Q[uick]R[esponse]C[ode] kann das Identifikationselement beispielsweise mindestens ein zum Speichern von filterspezifischen Daten ausgebildetes Speicherelement oder mindestens einen zum Speichern von filterspezifischen Daten ausgebildeten Speicherchip aufweisen.

Der Speicherchip kann dazu ausgebildet sein, Daten von mindestens einem zum Messen filterspezifischer Daten ausgebildeten Messfühler, beispielsweise von einem Drucksensor, zu erhalten und zu speichern. Der Messfühler oder Sensor kann die filterspezifischen Daten beispielsweise piezo-elektrisch messen. Alternativ kann eine Druckmessung auch erodiermaschinenseitig stattfinden.

Ferner kann das Identifikationselement mindestens einen zum Empfangen und zum Weiterleiten der filterspezifischen Daten ausgebildeten Transponder, insbesondere einen R[adio[F[requenz]ID[entifikations]-Transponder, aufweisen. Über diesen RFID-Transponder kann ein Datenaustausch mit einem der Erodiermaschine zugeordneten RFID-Lesegerät durchgeführt werden.

Beispielsweise kann der Speicherchip mittels des R[adio[F[requenz]ID[entifikations]-Transponders mit der Steuerung der Erodiermaschine verbunden sein. Ein mit einem Drucksensor sowie mit der Steuerung der Erodiermaschine kommunizierender Speicherchip kann beispielsweise automatisch zu einer Abschaltung der Filteranordnung und/oder der Erodiermaschine bei Erreichen eines definierten Differenzdrucks führen.

Bei einem vorteilhaften Ausführungsbeispiel der Filterschnittstelleneinheit der vorliegenden Erfindung dienen das Anschlussschnittstellenelement der Filteranordnung und das Anschlussschnittstellenelement der Erodiermaschine nicht nur dazu, das Dielektrikumzufuhranschlusselement der Erodiermaschine an die Filteranordnung anzuschlie-βen, sondern auch als Verbindungsstelle zwischen dem Identifikationselement der Filteranordnung und der Lesevorrichtung der Erodiermaschine, wobei an dieser Verbindungsstelle der Austausch von filterspezifischen Daten und/oder von filterspezifischen Steuersignalen erfolgt.

Das Adapterformschlusselement der Filteranordnung ermöglicht eine passgenaue Montage des exzentrisch zum Dielektrikumeinlass angeordneten Identifikationselements zum Dielektrikumzufuhranschlusselement der Erodiermaschine, insbesondere zu mindestens einer exzentrisch am Dielektrikumzufuhranschlusselement angeordneten Lesevorrichtung, beispielsweise zu mindestens einer exzentrisch am Dielektrikumzufuhranschlusselement angeordneten R[adio[F[requenz]ID[entifikations]-Lesevorrichtung.

Bei einer besonders vorteilhaften Ausführungsform der vorliegenden Erfindung legt somit das Adapterformschlusselement der Filteranordnung die Position einer R[adio[F[requenz]ID[entifikations]-Lesevorrichtung der Erodiermaschine über einem R[adio[F[requenz]ID[entifikations]-Speicherelement, insbesondere über einem R[adio[F[requenz]ID[entifikations]-Transponder, der Filteranordnung fest. Mittels einer winkeleindeutigen Montage der Adapterformschlusselemente kann beispielsweise sichergestellt werden, dass in der geschlossenen Position der Anschlussschnittstelle bzw. des Dielektrikumzufuhranschlusselements eine der Erodiermaschine zugeordnete R[adio[F[requenz]ID[entifikations]-Lesevorrichtung passgenau über einem R[adio[F[requenz]ID[entifikations]-Transponder der Filteranordnung angeordnet ist.

Die Filteranordnung ist vorteilhafterweise derart ausgebildet, dass das zu reinigende Dielektrikum das Filterelement von radial innen nach radial außen durchströmt.

Um eine besonders einfache Montage des Identifikationselements sowie des Adapterformschlusselements der Filteranordnung zu ermöglichen, sind das Identifikationselement, der Dielektrikumeinlass und das Adapterformschlusselement der Filteranordnung vorteilhafterweise einem zentral an einer Stirnseite der Filteranordnung angeordneten Anschlussschnittstellenelement der Filteranordnung zugeordnet.

Zum Abdecken einer Stirnfläche des Filterelements weist die Filteranordnung vorteilhafterweise mindestens eine Endscheibe auf. Zur Erleichterung der Montage des Anschlussschnittstellenelements ist dieses vorteilhafterweise mittels mindestens einem, insbesondere formschlüssigen, Verbindungsmittel, beispielsweise mittels mindestens einer Schnappverbindung oder mindestens einer Clipverbindung, verliersicher an der Endscheibe befestigbar.

Bei einer vorteilhaften Ausführungsform der vorliegenden Erfindung weist das Adapterformschlusselement eine sich vom Filterelement weg erstreckende flächige Erhöhung auf. Die Stirnfläche des Adapterformschlusselements der Filteranordnung ist also vorteilhafterweise axial versetzt angeordnet zur Stirnfläche des Filterelements der Filteranordnung bzw. zur Stirnfläche der Endscheibe.

Um eine besonders genaue Positionierung zu ermöglichen, ist vorteilhafterweise auf der Stirnfläche des Adapterformschlusselements der Filteranordnung mindestens eine weitere axiale Positionierungsgeometrie, insbesondere mindestens eine sich vom Filterelement weg erstreckende axiale geometrische Erhebung, angeordnet. Diese axiale Positionierungsgeometrie kann eine beliebige Geometrie, beispielsweise mindestens einen Buchstaben und/oder mindestens ein mathematisches Zeichen und/oder mindestens eine geometrische Form, etwa einen Stern oder ein Dreieck, aufweisen.

Die axiale Positionierungsgeometrie des Adapterformschlusselements der Filteranordnung ist vorteilhafterweise dazu ausgebildet, mit einer als Ausnehmung ausgebildeten axialen Positionierungsgeometrie des Adapterformschlusselements der Erodiermaschine derart zusammenzuwirken, dass in der geschlossenen Position der jeweiligen Adapterformschlusselemente die Positionierungsgeometrie der Filteranordnung durch die Positionierungsgeometrie der Erodiermaschine greift und von der Außenseite der Filteranordnung tastbar ist. Dabei sind die Positionierungsgeometrie des Adapterformschlusselements der Filteranordnung und die Positionierungsgeometrie des Adapterformschlusselements der Erodiermaschine als Gegenstücke zueinander ausgebildet. Die axiale Positionierungsgeometrie des Adapterformschlusselements kann beispielsweise eine komplett ausgenommene Aussparung, etwa ein komplett ausgenommener Schriftzug, sein.

Mit anderen Worten weist das Adapterformschlusselement der Filteranordnung vorteilhafterweise eine axiale Erhöhung auf, wobei auf dieser Erhöhung noch einmal etwas Erhabenes angeordnet ist, was in der geschlossenen Position der Adapterformschlusselemente durch die axiale Positionierungsgeometrie des Adapterformschlusselements der Erodiermaschine greift und von der vom Filterelement abgewandten Seite aus tastbar ist. Auf diese Weise kann, zum Beispiel der Bediener, mittels Tasten kontrollieren, ob die geschlossene Position der Adapterformschlusselemente erreicht ist.

Die Tastbarkeit der Positionierungsgeometrie des Adapterformschlusselements der Filteranordnung in der geschlossenen Position der Adapterformschlusselemente wird dadurch erreicht, dass die Erhabenheit der axialen Positionierungsgeometrie des Adapterformschlusselements der Filteranordnung größer ist als der axiale Verschiebeweg der jeweiligen Adapterformschlusselemente zum Anordnen der Adapterformschlusselemente in der geschlossenen Position bzw. zum Ineinandergreifen der Adapterformschlusselemente. Mit anderen Worten ist die Erhabenheit der axialen Positionierungsgeometrie des Adapterformschlusselements der Filteranordnung größer als das Rastspiel der Adapterformschlusselemente.

Bei einer vorteilhaften Ausgestaltung der Filterschnittstelleneinheit der vorliegenden Erfindung sind das Identifikationselement, der Dielektrikumeinlass und das Adapterformschlusselement der Filteranordnung einem zentral an der Stirnseite der Filteranordnung angeordneten Anschlussschnittstellenelement der Filteranordnung zugeordnet. Des Weiteren ist das Adapterformschlusselement der Erodiermaschine einem Anschlussschnittstellenelement der Erodiermaschine zugeordnet.

Das Anschlussschnittstellenelement der Filteranordnung und das Anschlussschnittstellenelement der Erodiermaschine sind jeweils dazu ausgebildet, durch eine Axialverschiebung entlang eines definierten Verschiebewegs ineinander einzurasten. Diese Axialverschiebung entlang eines definierten Verschiebewegs kann auch als Rastspiel bezeichnet werden. Ein Einrasten der jeweiligen Anschlussschnittstellenelemente ist dabei nur dann möglich, wenn das Adapterformschlusselement der Filteranordnung und das Adapterformschlusselement der Erodiermaschine ineinandergreifen und somit in einer definierten Winkelposition angeordnet sind. Mit anderen Worten lässt sich das Anschlussschnittstellenelement der Erodiermaschine nur dann anschließen, wenn das Adapterformschlusselement der Filteranordnung und das Adapterformschlusselement der Erodiermaschine ineinandergreifen.

### Kurze Beschreibung der Zeichnungen

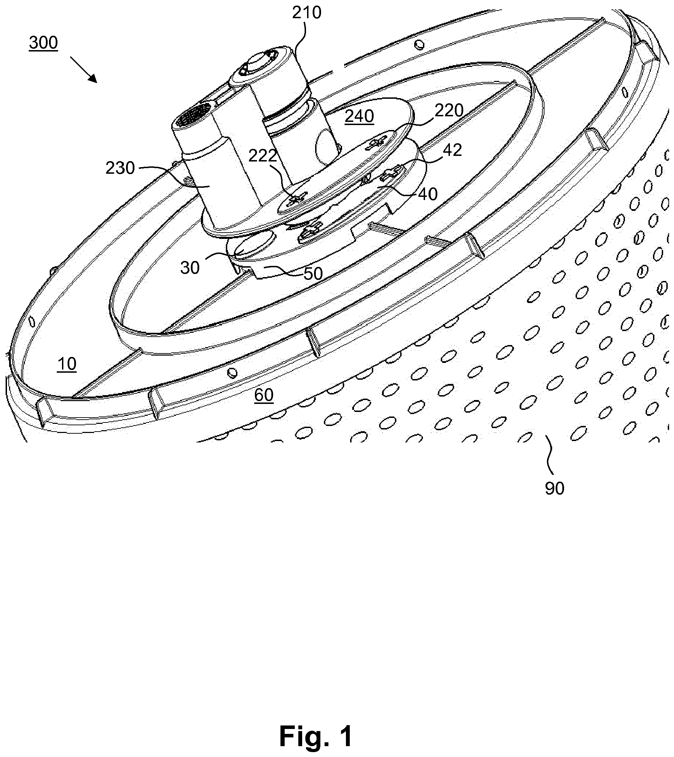

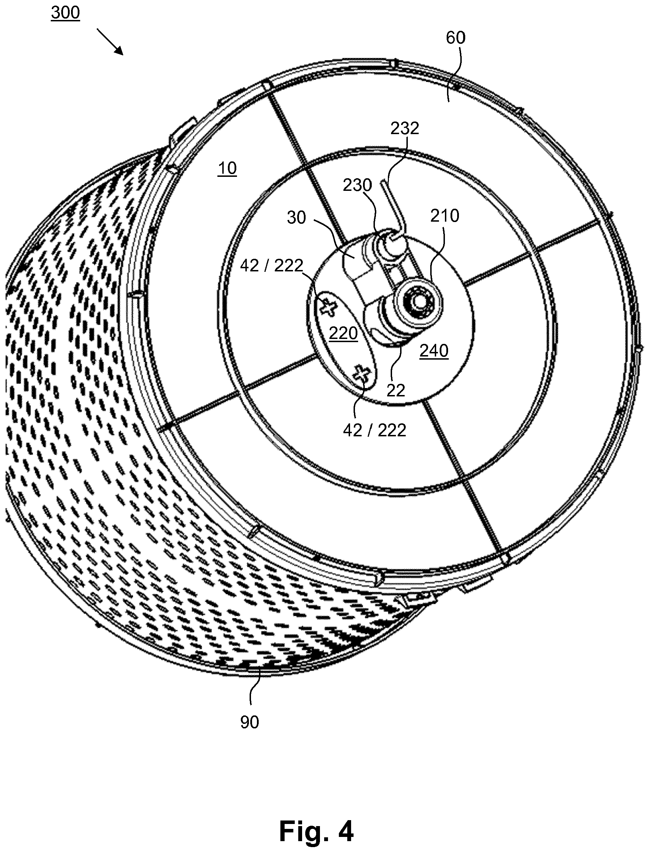

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1, dem Anspruch 8 sowie dem Anspruch 9 nachgeordneten Ansprüche verwiesen, andererseits werden weitere Ausgestaltungen, Merkmale und Vorteile der vorliegenden Erfindung nachstehend unter anderem anhand des durch die Figuren 1 bis 6 veranschaulichten Ausführungsbeispiels näher erläutert.

Es zeigt:
Fig. 1 in schematischer Darstellung ein Ausführungsbeispiel für eine Filterschnittstelleneinheit gemäß der vorliegenden Erfindung mit einem Ausführungsbeispiel für eine Filteranordnung gemäß der vorliegenden Erfindung;
Fig. 2 in isometrischer Seitenansicht (= linke Hälfte der Figur 2) sowie in schematischer Längsschnittdarstellung (= rechte Hälfte der Figur 2) die Filterschnittstelleneinheit aus Figur 1;
Fig. 3 in perspektivischer Darstellung eine Aufsicht auf die Filteranordnung aus Figur 1;
Fig. 4 in perspektivischer Darstellung eine Seitenansicht der Filterschnittstelleneinheit aus Figur 1;
Fig. 5 in schematischer Längsschnittdarstellung die Filterschnittstelleneinheit aus Figur 1, wobei die Adapterformschlusselemente in einer offenen Position angeordnet sind, also nicht in Eingriff miteinander sind; und
Fig. 6 in winkliger Schnittdarstellung die Filterschnittstelleneinheit aus Figur 1, wobei die Adapterformschlusselemente in einer geschlossenen Position angeordnet sind, also in Eingriff miteinander sind.

Gleiche oder ähnliche Ausgestaltungen, Elemente oder Merkmale sind in den Figuren 1 bis 6 mit identischen Bezugszeichen versehen.

### Ausführungsform(en) der Erfindung

Im anhand der Figuren 1 bis 6 veranschaulichten Ausführungsbeispiel der vorliegenden Erfindung ist eine Filterschnittstelleneinheit 300 mit einer Filteranordnung 100 sowie mit einem Anschlussschnittstellenelement 240 der Erodiermaschine gezeigt.

Die Filteranordnung 100 weist ein zum Reinigen eines Dielektrikums einer Erodiermaschine ausgebildetes hohlzylindrisches Flüssigfilterelement 80 mit einem an einer Stirnseite 10 der Filteranordnung 100 zentral angeordneten Dielektrikumeinlass 20 auf. Der Dielektrikumeinlass 20 ist einem Anschlussschnittstellenelement 50 der Filteranordnung 100 zugeordnet.

Zum Anschließen der Filteranordnung 100 an die Erodiermaschine hat der Dielektrikumeinlass 20 ein axiales rotationssymmetrisches Anschlussmittel 22. Wie in Figur 1 gezeigt, kann das axiale rotationssymmetrische Anschlussmittel 22 beispielsweise ein Schlauch-Konnektor oder eine Schlauch-Schnellkupplung sein. Dieser Schlauch-Konnektor oder diese Schlauch-Schnellkupplung kann derart ausgebildet sein, wie dies vom Stand der Technik beispielweise bei Gartenschläuchen bekannt ist.

So kann das axiale rotationssymmetrische Anschlussmittel 22 einen Kranz aufweisen, der von einem Rastelement umgriffen wird. Das axiale rotationssymmetrische Anschlussmittel 22 kann beispielsweise als ringförmiger Fortsatz ausgebildet sein, an den eine Schlauchkupplung angreifen kann. Alternativ zu einem Standard-Schlauch-Konnektor kann das axiale rotationssymmetrische Anschlussmittel 22 axial verspannt werden. Anstatt eines Schlauch-Anschlussmittels 22 hat die Filteranordnung 100 dann eine axiale Dichtung. Erodiermaschinenseitig ist dabei ein Flansch oder ein Rohr angeordnet, der bzw. das in die Filteranordnung 100 hineinragt und dann axial verspannt wird.

Das Anschlussschnittstellenelement 240 der Erodiermaschine weist ein mit einem Dielektrikumzufuhrelement, beispielsweise mit einem Schlauch, verbundenes Dielektrikumzufuhranschlusselement 210 auf. Dieses Dielektrikumzufuhranschlusselement 210 ist als Gegenstück 210 zu dem axialen rotationssymmetrischen Anschlussmittel 22 der Filteranordnung 100 ausgebildet. Das Dielektrikumzufuhranschlusselement 210 ist also vorteilhafterweise ein Schlauch-Konnektorelement oder ein Schlauch-Schnellkupplungselement, wie dies vom Stand der Technik beispielweise bei Gartenschläuchen bekannt ist. Der Schlauch kann somit mittels einer Schnellkupplung 22, 210 an das Flüssigfilterelement adaptiert werden. Der Schlauch kann beispielsweise einen Durchmesser von 13 Zoll oder 19 Millimetern (mm) aufweisen.

Das Anschlussschnittstellenelement 240 der Erodiermaschine kann also ein konventioneller Schlauch-Anschlussadapter sein, wobei außen um den Schlauch-Anschlussadapter herum eine Fläche, beispielsweise aus Kunststoff, angeordnet ist und auf dieser Fläche ein RFID-Reader und ein Adapterformschlusselement angeordnet sind.

Das in Figur 1 gezeigte Filterelement 80 ist relativ groß. Beispielsweise kann das Filterelement 80 einen Durchmesser von etwa 340 mm und eine Höhe etwa 300 mm aufweisen. Die Filteranordnung 100 ist ein sogenannter "stand alone Filter", der ohne Druckbehälter auf der Anlage auskommt. Dabei nimmt ein axial außen um das Filterelement 80 angeordneter fluiddurchlässiger Stützkörper 90 den kompletten Differenzdruck auf. Der Stützkörper 90 kann beispielsweise ein Fluiddurchtrittsöffnungen aufweisender Außenmantel 90, etwa ein Lochblech, oder ein Lochausnehmungen aufweisendes Kunststoffgehäuse sein.

An den Stirnseiten der Filteranordnung ist jeweils eine Endscheibe 60 angeordnet. Diese Endscheiben 60 tragen den Stützkörper 90 und gewährleisten die Druckfestigkeit der Filteranordnung 100.

Das Dielektrikum strömt über den Fluidanschluss 20, 22, 210 in die Filteranordnung 100 ein und durchströmt den Filterbalg 80 von innen nach außen. Mit zunehmendem Beladezustand, also mit zunehmend im Filterbalg 80 angesammelten Stahlpartikeln, steigt der Differenzdruck der Filteranordnung 100 an. Der Differenzdruck wird über den Außenmantel 90 aufgenommen. Bei einem definierten Differenzdruck, beispielsweise bei 3,0 bar, wird die Filteranordnung 100 komplett gewechselt. Der Filterbalg 80 ist nicht auswechselbar. Die komplette Filteranordnung 100, welche beispielsweise von einem Kunststoffgehäuse umgeben ist, wird von der Erodiermaschine heruntergenommen und entsorgt.

An einer Stirnseite 10 der Filteranordnung 100 ist ein Identifikationselement 30, beispielsweise ein R[adio[F[requenz]ID[entifikations]-Chip und/oder ein R[adio[F[requenz]ID[entifikations]-Transponder, filterfest angeordnet. Das Identifikationselement 30 speichert filterspezifische Daten, welche es beispielsweise von einem Messelement, etwa von einem Drucksensor erhält. Die in den Figuren 1 bis 6 gezeigte Filteranordnung kann also beispielsweise ein E[ro]D[ier]M[aschinen]-Filter mit einem R[adio[F[requenz]ID[entifikations]-Chip und berührungslos auslesbarem Drucksensor sein.

Das Identifikationselement 30 ist mit radialem Abstand zum Dielektrikumeinlass 20 angeordnet.

Das Identifikationselement 30 weist dem Filterelement 80 eine eindeutige ID[entifikation] zu. So speichert das Identifikationselement 30 beispielsweise Informationen darüber, wie das Filterelement 80 zu betreiben ist, wie das Filterelement 80 anzuströmen ist und/oder bis zu welchem Differenzdruck das Filterelement 80 angeströmt werden darf. Die vom Identifikationselement gespeicherten Informationen können beispielsweise Informationen für die Erodiermaschine und/oder für den Endanwender beinhalten. Das Identifikationselement 30 liegt in einem Aufnahmeelement 32, nämlich in einer axialen Erhöhung, des Anschlussschnittstellenelements 50 der Filteranordnung 100. Das Identifikationselement 30 kann beispielsweise scheibenartig ausgebildet sein und einen beispielhaften Durchmesser von etwa 16 mm bis 20 mm aufweisen.

Zum Auslesen des Identifikationselements 30 weist das Anschlussschnittstellenelement 240 der Erodiermaschine mindestens eine zum berührungslosen Lesen oder Auslesen der Daten des Identifikationselements 30 der Filteranordnung 100 ausgebildete Lesevorrichtung 230, beispielsweise einen R[adio[F[requenz]ID[entifikations]-Reader, auf. Dabei ist eine genaue Positionierung der Lesevorrichtung 230 in Bezug zum Identifikationselement 30 Voraussetzung, damit das Identifikationselement von der Lesevorrichtung 230 erkannt bzw. ausgelesen wird. Die Lesevorrichtung 230 ist mit der Erodiermaschine verbunden.

Um die Position des Identifikationselements 30 zur Lesevorrichtung 230 festzulegen, weisen das Anschlussschnittstellenelement 50 der Filteranordnung 100 und das Anschlussschnittstellenelement 240 der Erodiermaschine jeweils ein Adapterformschlusselement 40 bzw. 220 auf. Diese Adapterformschlusselemente 40 bzw. 220 sind lösbar miteinander verbindbar und als Gegenstücke zueinander ausgebildet. Die Adapterformschlusselemente 40 bzw. 220 sind exzentrisch am Anschlussschnittstellenelement 50 bzw. 240 angeordnet und erlauben damit das Verschließen der Anschlussschnittstellenelemente 50 bzw. 240 nur in einer definierten Winkelposition.

Die in den Figuren 1 bis 6 gezeigte Filteranordnung 100 weist also einen, nach Art eines Gartenschlauchanschlusses ausgebildeten, Fluidanschluss 20, 22, 210 auf. Dieser Fluidanschluss 20, 22, 210 ist an sich rotationssymmetrisch ausgebildet, kann also in einer beliebigen Winkelposition angeschlossen werden.

An den Anschlussschnittstellenelementen 50 bzw. 240 sind exzentrisch zum Fluidanschluss 20, 22, 210 angeordnete Adapterformschlusselemente 40 bzw. 220 vorgesehen. Diese Adapterformschlusselemente 40 bzw. 220 können beispielsweise eine filterseitig erhabene und maschinenseitig eingesenkte Struktur aufweisen.

Mittels der Adapterformschlusselemente 40 bzw. 220 wird beim Verbinden der Anschlussschnittstellenelemente 50 bzw. 240 die Lesevorrichtung 230 mit dem Fluidanschluss 210 genau über dem Identifikationselement 30 positioniert. Dabei sind die Adapterformschlusselemente 40 bzw. 220 derart ausgebildet, dass der Fluidanschluss 20, 22, 210 nur angeschlossen werden kann, wenn die beiden Formschlusselemente 40 bzw. 220 in Eingriff miteinander sind.

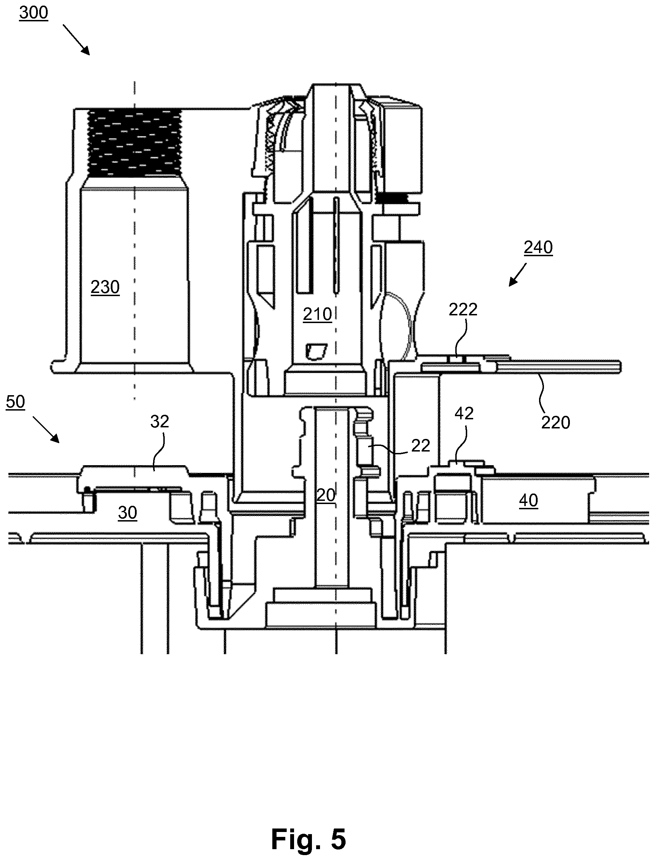

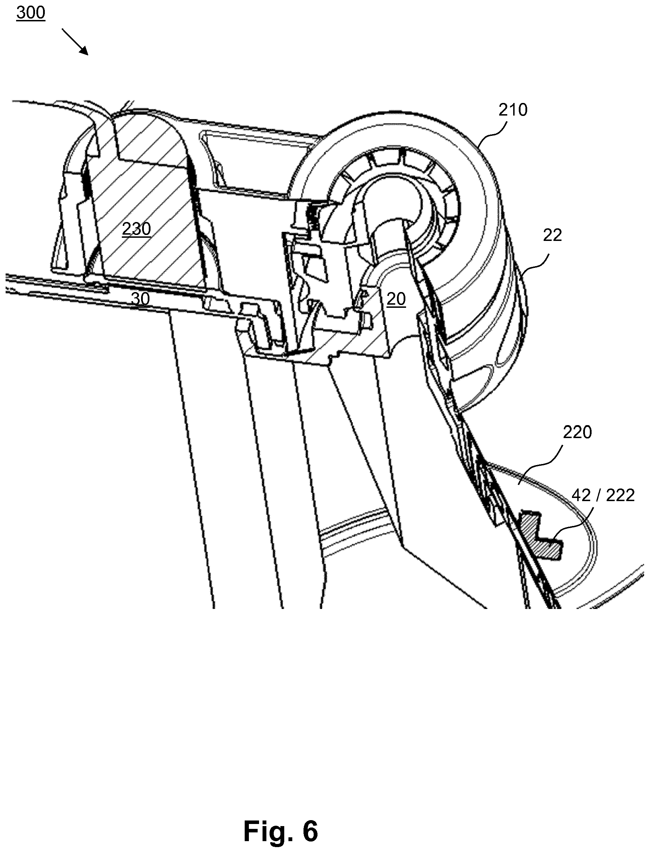

Die Figuren 5 und 6 zeigen schematisch die Merkmale des Fluidanschlusses mit dem Dielektrikumeinlass 20, dem Anschlussmittel 22 der Filteranordnung 100 und dem Dielektrikumzufuhranschlusselement 210 der Erodiermaschine. In Figur 5 ist eine erste Stellung gezeigt, bei welchem die Positionierungsgeometrie der Adapterformschlusselemente noch nicht im Eingriff ist. In dieser Stellung ist auch der Fluidanschluss 20, 22, 210 nicht im Eingriff und die Lesevorrichtung 230 nicht über dem Identifikationselement 30 angeordnet.

Figur 6 zeigt eine zweite Stellung, nämlich die Gebrauchsstellung oder Endposition der Filteranordnung 100. Bei dieser Gebrauchsstellung greifen die Adapterformschlusselemente 40, 220 formschlüssig ineinander und der Fluidanschluss 20, 22, 210 schließt, Fluidanschluss und Kupplung sind also im Eingriff und dicht.

### Bezugszeichenliste

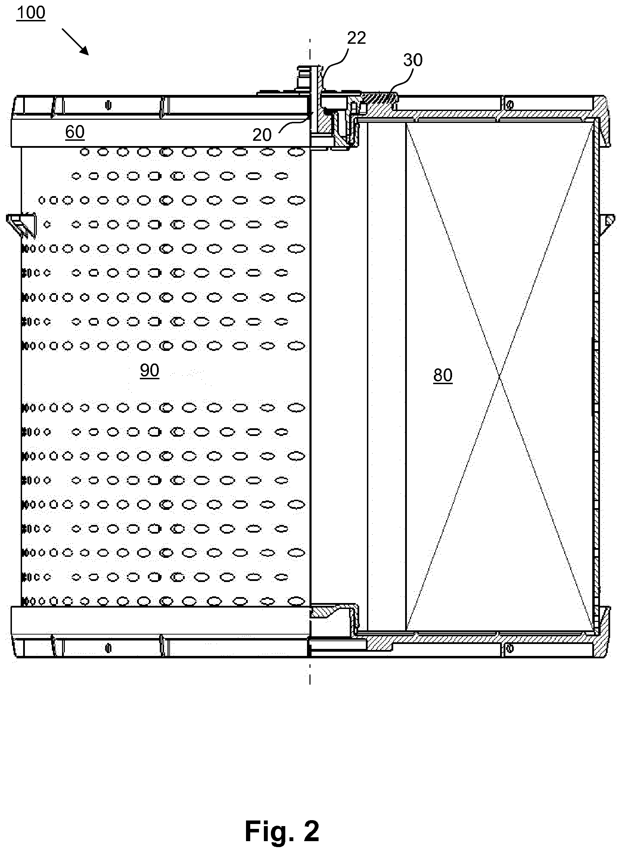

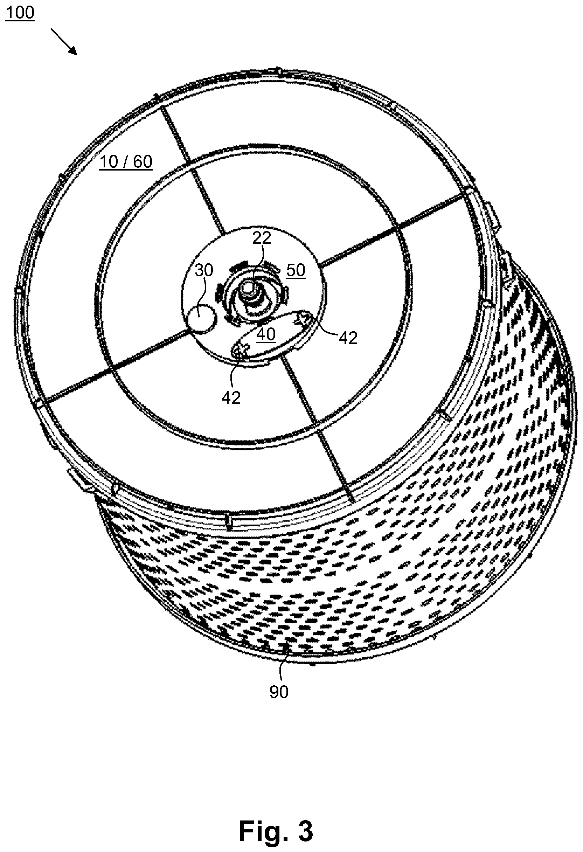

- 10: Stirnseite der Filteranordnung 100
- 20: Dielektrikumeinlass, insbesondere Fluidanschluss
- 22: axiales rotationssymmetrisches Anschlussmittel des Dielektrikumeinlasses 20, insbesondere Schlauch-Konnektor oder Schlauch-Schnellkupplung
- 30: Identifikationselement, insbesondere Speicherelement und/oder Transponder, beispielsweise R[adio[F[requenz]ID[entifikations]-Transponder und/oder Q[uick]R[esponse]C[ode]
- 32: zur Aufnahme des Identifikationselements 30 ausgebildetes Aufnahmeelement, insbesondere axiale Erhöhung, des Anschlussschnittstellenelements 50 der Filteranordnung 100 (vgl. Figur 5)
- 40: Adapterformschlusselement der Filteranordnung 100
- 42: Positionierungsgeometrie des Adapterformschlusselements 40 der Filteranordnung 100, insbesondere axiale geometrische Erhebung, beispielsweise mindestens ein Buchstaben und/oder mindestens ein mathematisches Zeichen und/oder mindestens eine geometrische Form, etwa ein Stern oder ein Dreieck, beispielsweise erhobene Positionierungsgeometrie
- 50: Anschlussschnittstellenelement der Filteranordnung 100, insbesondere filterseitiger Adapter
- 60: Endscheibe
- 80: hohlzylindrisches Filterelement, insbesondere Flüssigfilterelement, der Filteranordnung 100, beispielsweise Filterbalg
- 90: um das Filterelement 100 angeordneter fluiddurchlässiger Stützkörper oder Außenmantel, insbesondere Lochblech oder Stützgitter, der Filteranordnung 100
- 100: Filteranordnung (vgl. Figuren 2 und 3)
- 210: Dielektrikumzufuhranschlusselement, insbesondere Konnektor, beispielsweise Fluidadapter, etwa Fluidanschluss oder Fluidkupplung
- 220: Adapterformschlusselement der Erodiermaschine
- 222: Positionierungsgeometrie des Adapterformschlusselements 220 der Erodiermaschine, insbesondere ausgesparte Positionierungsgeometrie
- 230: Lesevorrichtung, insbesondere einen R[adio[F[requenz]ID[entifikations]-Lesegerät oder R[adio[F[requenz]ID[entifikations]-Reader, beispielsweise Schreib- und/oder Lesekopf für den R[adio[F[requenz]ID[entifikations]-Transponder 30
- 232: Anschlusskabel der Lesevorrichtung 230 zum Verbinden der Lesevorrichtung 230 mit der Erodiermaschine, insbesondere mit mindestens einem Steuerelement der Erodiermaschine
- 240: Anschlussschnittstellenelement der Erodiermaschine, insbesondere maschinenseitiger Adapter
- 300: Filterschnittstelleneinheit für eine Erodiermaschine

## Patentansprüche

1. Filteranordnung (100) für eine Erodiermaschine, aufweisend
- mindestens ein zum Reinigen eines Dielektrikums der Erodiermaschine ausgebildetes hohlzylindrisches Filterelement (80) und
- mindestens einen an einer Stirnseite (10) der Filteranordnung (100) zentral angeordneten Dielektrikumeinlass (20) mit mindestens einem axialen rotationssymmetrischen Anschlussmittel (22) zum Anschließen eines Dielektrikumzufuhranschlusselements (210) der Erodiermaschine, wobei die Filteranordnung (100) so ausgebildet ist, dass das zu reinigende Dielektrikum das Filterelement von radial innen nach radial außen durchströmt, wobei die Filteranordnung (100) als sogenannter "stand alone Filter" ausgebildet ist, der ohne Druckbehälter auskommt, derart, dass ein außen um das Filterelement (80) angeordneter fluiddurchlässiger Stützkörper (90) zur Aufnahme des Differenzdrucks vorgesehen ist, welcher als ein Fluiddurchtrittsöffnungen aufweisender Außenmantel ausgebildet ist, wobei an den Stirnseiten der Filteranordnung (100) jeweils eine Endscheibe (60) angeordnet ist, wobei die Endscheiben (60) den Stützkörper (90) tragen,
- mindestens ein filterspezifische Daten aufweisendes Identifikationselement (30), das an der Stirnseite (10) der Filteranordnung (100) verliersicher befestigt ist, wobei das Identifikationselement (30) mit radialem Abstand zum Dielektrikumeinlass (20) angeordnet ist,
**dadurch gekennzeichnet, dass**
- das rotationssymmetrischen Anschlussmittel (22) ein axialer Schlauchanschlussfortsatz eingerichtet zum Anschluss eines als Schlauch-Schnellkupplungselement ausgebildeten Dielektrikumzufuhranschlusselements (210) ist, und
- an der Stirnseite (10) der Filteranordnung (100) mit radialem Abstand zum Dielektrikumeinlass (20) mindestens ein Adapterformschlusselement (40) verliersicher befestigt ist, wobei zum Anschließen der Filteranordnung (100) an die Erodiermaschine das Adapterformschlusselement (40) der Filteranordnung (100) lösbar mit einem Adapterformschlusselement (220) der Erodiermaschine verbindbar ist, wobei in einer geschlossenen Position der Adapterformschlusselemente (40, 220) der axiale Dielektrikumeinlass (20) der Filteranordnung (100) fluiddicht mit dem Dielektrikumzufuhranschlusselement (210) der Erodiermaschine verbindbar ist und wobei das Adapterformschlusselement (40) der Filteranordnung (100) derart ausgebildet ist, dass es die geschlossene Position der jeweiligen Adapterformschlusselemente (40, 220) nur in einer definierten Winkelposition erlaubt und damit die Position des Identifikationselements (30) zum Adapterformschlusselement (220) der Erodiermaschine festlegt.

2. Filteranordnung nach Anspruch 1, **dadurch gekennzeichnet, dass** das Identifikationselement (30) mindestens ein zum Speichern von filterspezifischen Daten ausgebildetes Speicherelement und/oder mindestens einen zum Empfangen und Weiterleiten von filterspezifischen Daten ausgebildeten Transponder aufweist.

3. Filteranordnung nach Anspruch 1 oder 2, **dadurch gekennzeichnet, dass** das axiale rotationssymmetrische Anschlussmittel (22) des Dielektrikumeinlasses (20) ein axialer Schlauchanschlussfortsatz, beispielsweise mit Gewinde, ist.

4. Filteranordnung nach mindestens einem der Ansprüche 1 bis 3, **dadurch gekennzeichnet, dass** das Identifikationselement (30), der Dielektrikumeinlass (20) und das Adapterformschlusselement (40) der Filteranordnung (100) einem zentral an der Stirnseite (10) der Filteranordnung (100) angeordneten Anschlussschnittstellenelement (50) der Filteranordnung (100) zugeordnet sind.

5. Filteranordnung nach mindestens einem der Ansprüche 1 bis 4, **dadurch gekennzeichnet, dass** an der Stirnseite (10) der Filteranordnung (100) eine zum Abdecken einer ersten Stirnfläche des Filterelements ausgebildete Endscheibe (60) angeordnet ist und dass das Anschlussschnittstellenelement (50) der Filteranordnung (100) mittels mindestens einem Verbindungsmittel, insbesondere mittels mindestens einem Schnappverbindungselement oder Clipverbindungselement, verliersicher an der Endscheibe (60) befestigbar ist.

6. Filteranordnung nach mindestens einem der Ansprüche 1 bis 5, **dadurch gekennzeichnet, dass** das Adapterformschlusselement (40) der Filteranordnung (100) eine von der Filteranordnung (100) abgewendete Stirnfläche aufweist, wobei die Stirnfläche des Adapterformschlusselements (40) der Filteranordnung (100) axial versetzt angeordnet ist zur Stirnfläche (10) der Filteranordnung (100) oder zur von der Filteranordnung (100) abgewandten Fläche einer zum Abdecken einer Stirnseite des Filterelements ausgebildeten Endscheibe (60).

7. Filteranordnung nach Anspruch 6, **dadurch gekennzeichnet, dass** die Stirnfläche des Adapterformschlusselements (40) der Filteranordnung (100) mindestens eine weitere axiale Positionierungsgeometrie (42), insbesondere mindestens eine auf der Stirnfläche des Adapterformschlusselements (40) der Filteranordnung (100) angeordnete und sich vom Filterelement weg erstreckende axiale geometrische Erhebung (42), beispielsweise mindestens einen Buchstaben und/oder mindestens ein mathematisches Zeichen und/oder mindestens eine geometrische Form, etwa einen Stern oder ein Dreieck, aufweist.

8. Filterschnittstelleneinheit (300) für eine Erodiermaschine, umfassend eine Filteranordnung (100) nach mindestens einem der vorhergehenden Ansprüche 1 bis 7 sowie ein Anschlussschnittstellenelement (240) für eine Erodiermaschine, das Anschlussschnittstellenelement (240) aufweisend mindestens ein als Schlauch-Schnellkupplungselement ausgebildeten Dielektrikumzufuhranschlusselement (210), das dazu ausgebildet ist, ein Dielektrikumzufuhrelement, insbesondere mindestens eine Zuleitung, beispielsweise mindestens einen Schlauch, der Erodiermaschine an ein Anschlussmittel (22) einer zum Reinigen eines Dielektrikums der Erodiermaschine ausgebildeten Filteranordnung (100) anzuschließen, wobei das Dielektrikumzufuhranschlusselement (210) zentral am Anschlussschnittstellenelement (240) angeordnet ist, **gekennzeichnet durch**
- mindestens eine zum berührungslosen Lesen von Daten mindestens eines Identifikationselements (30) der Filteranordnung (100) ausgebildete Lesevorrichtung (230), insbesondere mindestens einen R[adio[F[requenz]ID[entifikations]-Reader, wobei die Lesevorrichtung (230) mit radialem Abstand zum Dielektrikumzufuhranschlusselement (210) angeordnet ist, und
- mindestens ein mit radialem Abstand zum Dielektrikumzufuhranschlusselement (210) angeordnetes Adapterformschlusselement (220), wobei das Adapterformschlusselement (220) der Erodiermaschine dazu ausgebildet ist, den Anschluss der Erodiermaschine an die Filteranordnung (100) zu ermöglichen, wobei das Adapterformschlusselement (40) der Filteranordnung (100) lösbar mit dem Adapterformschlusselement (220) der Erodiermaschine verbindbar ist, wobei in einer geschlossenen Position der Adapterformschlusselemente (20, 220) das Dielektrikumzufuhranschlusselement (210) der Erodiermaschine fluiddicht mit einem axialen Dielektrikumeinlass (20) der Filteranordnung (100) verbindbar ist, wobei das Adapterformschlusselement (220) der Erodiermaschine als Gegenstück zum Adapterformschlusselement (40) der Filteranordnung (100) ausgebildet ist und wobei das Adapterformschlusselement (220) der Erodiermaschine derart ausgebildet ist, dass es die geschlossene Position der jeweiligen Adapterformschlusselemente (40, 220) nur in einer definierten Winkelposition erlaubt und damit die Position der Lesevorrichtung (230) zum Adapterformschlusselement (40) der Filteranordnung (100) festlegt.

9. Filterschnittstelleneinheit nach Anspruch 8, **dadurch gekennzeichnet, dass**
- das Identifikationselement (30), der Dielektrikumeinlass (20) und das Adapterformschlusselement (40) der Filteranordnung (100) dem zentral an der Stirnseite (10) der Filteranordnung (100) angeordneten Anschlussschnittstellenelement (50) der Filteranordnung (100) zugeordnet sind,
- das Adapterformschlusselement (220) der Erodiermaschine dem Anschlussschnittstellenelement (240) der Erodiermaschine zugeordnet ist und
- das Anschlussschnittstellenelement (50) der Filteranordnung (100) und das Anschlussschnittstellenelement (240) der Erodiermaschine dazu ausgebildet sind, durch eine Axialverschiebung entlang eines definierten Verschiebewegs ineinander einzurasten, wobei ein Einrasten der jeweiligen Anschlussschnittstellenelemente (50, 240) nur dann möglich ist, wenn das Adapterformschlusselement (40) der Filteranordnung (100) und das Adapterformschlusselement (220) der Erodiermaschine ineinandergreifen.

10. Filterschnittstelleneinheit nach Anspruch 8 oder 9, **dadurch gekennzeichnet, dass** das Adapterformschlusselement (40) der Filteranordnung (100) und das Adapterformschlusselement (220) der Erodiermaschine derart ausgebildet sind, dass sie die geschlossene Position der jeweiligen Adapterformschlusselemente (40, 220) nur in einer definierten Winkelposition erlauben und damit die Position des Identifikationselements (30) zur Lesevorrichtung (230) festlegen.

11. Filterschnittstelleneinheit nach mindestens einem der Ansprüche 8 bis 10, **dadurch gekennzeichnet, dass** das Anschlussschnittstellenelement (240) der Erodiermaschine das Dielektrikumzufuhranschlusselement (210) aufweist, wobei das Dielektrikumzufuhranschlusselement (210) insbesondere ein Schlauchanschlusselement ist.

12. Filterschnittstelleneinheit nach mindestens einem der Ansprüche 8 bis 11, **dadurch gekennzeichnet, dass** das Adapterformschlusselement (40) der Filteranordnung (100) mindestens eine weitere axiale Positionierungsgeometrie (42) aufweist, welche derart mit einer als Ausnehmung ausgebildeten axialen Positionierungsgeometrie (222) des Adapterformschlusselements (220) der Erodiermaschine zusammenwirkt, dass in der geschlossenen Position des Adapterformschlusselements (40) der Filteranordnung (100) und des Adapterformschlusselements (220) der Erodiermaschine die Positionierungsgeometrie (42) der Filteranordnung durch die Positionierungsgeometrie (222) der Erodiermaschine greift und von außen tastbar ist.

## Claims

1. Filter arrangement (100) for an electric discharge machine, featuring
- at least one hollow-cylindrical filter element (80) designed for cleaning a dielectric of the electric discharge machine, and
- at least one dielectric inlet (20) centrally disposed at a front face (10) of the filter arrangement (100) having at least one axial rotationally symmetric connection means (22) for connecting a dielectric feed connection element (210) of the electric discharge machine, wherein the filter arrangement (100) is designed such that the dielectric to be cleaned flows through the filter element from radially inward to radially outward, wherein the filter arrangement (100) is designed as a so-called "stand-alone filter" not requiring a pressure vessel, in such a way that, for accepting the differential pressure, a fluid-permeable support body (90) designed as an outer casing having fluid passage openings is disposed externally around the filter element (80), wherein an end disc (60) is disposed at each of the front faces of the filter arrangement (100), wherein the end discs (60) support the support body (90),
- at least one identification element (30) having filter-specific data, which is secured at the front face (10) of the filter arrangement (100) against loss, wherein the identification element (30) is disposed at a radial distance from the dielectric inlet (20),
**characterized in that**
- the rotationally symmetric connection means (22) is an axial hose connection extension arranged for connecting a dielectric feed connection element (210) designed as a hose quick coupling element, and
- at least one adapter form-fitting element (40) is secured against loss at the front face (10) of the filter arrangement (100) at a radial distance from the dielectric inlet (20), wherein for connecting the filter arrangement (100) to the electric discharge machine, the adapter form-fitting element (40) of the filter arrangement (100) is detachably connectable to an adapter form-fitting element (220) of the electric discharge machine, wherein, in a closed position of the adapter form-fitting elements (40, 220), the axial dielectric inlet (20) of the filter arrangement (100) is connectable in a fluid-tight manner to the dielectric feed connection element (210) of the electric discharge machine, and wherein the adapter form-fitting element (40) of the filter arrangement (100) is designed such that it allows the closed position of the respective adapter form-fitting elements (40, 220) only in a defined angular position and thus determines the position of the identification element (30) relative to the adapter form-fitting element (220) of the electric discharge machine.

2. Filter arrangement according to claim 1, **characterized in that** the identification element (30) features at least one memory element designed for storing filter-specific data and/or at least one transponder designed for receiving and forwarding filter-specific data.

3. Filter arrangement according to claim 1 or 2, **characterized in that** the axial rotationally symmetric connection means (22) of the dielectric inlet (20) is an axial hose connection extension, for example threaded.

4. Filter arrangement according to at least one of the claims 1 to 3, **characterized in that** the identification element (30), the dielectric inlet (20) and the adapter form-fitting element (40) of the filter arrangement (100) are associated with a connection interface element (50) of the filter arrangement (100) disposed centrally on the front face (10) of the filter arrangement (100).

5. Filter arrangement according to at least one of the claims 1 to 4, **characterized in that** an end disc (60) designed to cover a first end face of the filter element is disposed on the front face (10) of the filter arrangement (100), and **in that** the connection interface element (50) of the filter arrangement (100) can be secured at the end disc (60) against loss using at least one connecting means, in particular using at least one snap-connection element or clip-connection element.

6. Filter arrangement according to at least one of the claims 1 to 5, **characterized in that** the adapter form-fitting element (40) of the filter arrangement (100) features an end face facing away from the filter arrangement (100), wherein the end face of the adapter form-fitting element (40) of the filter arrangement (100) is disposed axially offset with respect to the front face (10) of the filter arrangement (100) or with respect to the surface, facing away from the filter arrangement (100), of an end disc (60) designed to cover a front face of the filter element.

7. Filter arrangement according to claim 6, **characterized in that** the end face of the adapter form-fitting element (40) of the filter arrangement (100) comprises at least one further axial positioning geometry (42), in particular at least one axial geometric elevation (42), for example at least one letter and/or at least one mathematical sign and/or at least one geometric shape, such as a star or a triangle, disposed on the end face of the adapter form-fitting element (40) of the filter arrangement (100) and extending away from the filter element.

8. Filter interface unit (300) for an electric discharge machine, comprising a filter arrangement (100) according to at least one of the preceding claims 1 to 7 and a connection interface element (240) for an electric discharge machine, the connection interface element (240) comprising at least one dielectric feed connection element (210) designed as a hose quick coupling element, which is designed to connect a dielectric feed element, in particular at least one supply line, for example at least one hose, of the electric discharge machine to a connection means (22) of a filter arrangement (100) designed for cleaning a dielectric of the electric discharge machine, wherein the dielectric feed connection element (210) is centrally located on the connection interface element (240), **characterized by**
- at least one reading device (230) designed for contactless reading of data of at least one identification element (30) of the filter arrangement (100), in particular at least one R[adio[F[requency] ID[entification] reader, wherein the reading device (230) is disposed at a radial distance from the dielectric feed connection element (210), and
- at least one adapter form-fitting element (220) disposed at a radial distance from the dielectric feed connection element (210), wherein the adapter form-fitting element (220) of the electric discharge machine is designed to allow the electric discharge machine to be connected to the filter arrangement (100), wherein the adapter form-fitting element (40) of the filter arrangement (100) is detachably connectable to the adapter form-fitting element (220) of the electric discharge machine, wherein, in a closed position of the adapter form-fitting elements (20, 220), the dielectric feed connection element (210) of the electric discharge machine is connectable in a fluid-tight manner to an axial dielectric inlet (20) of the filter arrangement (100), wherein the adapter form-fitting element (220) of the electric discharge machine is designed as a counterpart to the adapter form-fitting element (40) of the filter arrangement (100), and wherein the adapter form-fitting element (220) of the electric discharge machine is designed in such a way that it allows the closed position of the respective adapter form-fitting elements (40, 220) only in a defined angular position, thus determining the position of the reading device (230) relative to the adapter form-fitting element (40) of the filter arrangement (100).

9. Filter interface unit according to claim 8, **characterized in that**
- the identification element (30), the dielectric inlet (20) and the adapter form-fitting element (40) of the filter arrangement (100) are associated with a connection interface element (50) of the filter arrangement (100) disposed centrally on the front face (10) of the filter arrangement (100),
- the adapter form-fitting element (220) of the electric discharge machine is associated with the connection interface element (240) of the electric discharge machine, and
- the connection interface element (50) of the filter arrangement (100) and the connection interface element (240) of the electric discharge machine are designed to engage which each other by means of an axial displacement along a defined displacement path, wherein an engagement of the respective connection interface elements (50, 240) is only possible when the adapter form-fitting element (40) of the filter arrangement (100) and the adapter form-fitting element (220) of the electric discharge machine engage with each other.

10. Filter interface unit according to claim 8 or 9, **characterized in that** the adapter form-fitting element (40) of the filter arrangement (100) and the adapter form-fitting element (220) of the electric discharge machine are designed in such a way that they allow the closed position of the respective adapter form-fitting elements (40, 220) only in a defined angular position and thus define the position of the identification element (30) with respect to the reading device (230).

11. Filter interface unit according to at least one of the claims 8 to 10, **characterized in that** the connection interface element (240) of the electric discharge machine features the dielectric feed connection element (210), wherein the dielectric feed connection element (210) is in particular a hose connection element.

12. Filter interface unit according to at least one of the claims 8 to 11, **characterized in that** the adapter form-fitting element (40) of the filter arrangement (100) features at least one further axial positioning geometry (42) which interacts in such a way with an axial positioning geometry (222), designed as a recess, of the adapter form-fitting element (220) of the electric discharge machine, that in the closed position of the adapter form-fitting element (40) of the filter arrangement (100) and the adapter form-fitting element (220) of the electric discharge machine, the positioning geometry (42) of the filter arrangement engages through the positioning geometry (222) of the electric discharge machine and can be palpated from the outside.

## Revendications

1. Ensemble de filtre (100) pour une érodeuse, présentant
- au moins un élément filtrant cylindrique creux (80) conçu pour nettoyer un diélectrique de l'érodeuse, et
- au moins une entrée de diélectrique (20) disposée de manière centrale sur une face frontale (10) de l'ensemble de filtre (100) ayant au moins un moyen de raccordement (22) axial à symétrie de révolution pour raccorder un élément de raccordement d'alimentation en diélectrique (210) de l'érodeuse, l'ensemble de filtre (100) étant conçu de telle sorte que le diélectrique à nettoyer traverse l'élément filtrant de l'intérieur radialement vers l'extérieur radialement, l'ensemble de filtre (100) étant conçu en tant que soi-disant « filtre autonome », qui se passe de réservoir sous pression, de telle sorte qu'un élément d'appui (90) perméable aux fluides, réalisé sous la forme d'une enveloppe extérieure présentant des ouvertures de passage de fluide, est disposé à l'extérieur autour de l'élément filtrant (80), est prévu pour recevoir la pression différentielle, un disque d'extrémité (60) étant disposé sur chacune des faces frontales de l'ensemble de filtre (100), les disques d'extrémité (60) supportant l'élément d'appui (90),
- au moins un élément d'identification (30) présentant des données spécifiques au filtre, qui est fixé sur la face frontale (10) de l'ensemble de filtre (100) de manière à ne pas être perdu, l'élément d'identification (30) étant disposé à une distance radiale de l'entrée de diélectrique (20),
**caractérisé en ce que**
- le moyen de raccordement à symétrie de révolution (22) est un prolongement de raccordement de tuyau axial aménagé pour le raccordement d'un élément de raccordement d'alimentation en diélectrique (210) conçu comme un élément de raccordement rapide de tuyau, et
- sur la face frontale (10) de l'ensemble de filtre (100) et à une distance radiale de l'entrée de diélectrique (20), au moins un élément de fermeture positive d'adaptateur (40) est fixé de manière à ne pas être perdu, pour raccorder l'ensemble de filtre (100) à l'érodeuse, l'élément de fermeture positive d'adaptateur (40) de l'ensemble de filtre (100) pouvant être relié de manière amovible à un élément de fermeture positive d'adaptateur (220) de l'érodeuse, dans une position fermée des éléments de fermeture positive d'adaptateur (40, 220), l'entrée de diélectrique axiale (20) de l'ensemble de filtre (100) peut être raccordée de manière étanche aux fluides à l'élément de raccordement d'alimentation en diélectrique (210) de l'érodeuse, et l'élément de fermeture positive d'adaptateur (40) de l'ensemble de filtre (100) étant conçu de telle sorte qu'il ne permet la position fermée des éléments de fermeture positive d'adaptateur (40, 220) respectifs que dans une position angulaire définie et fixe ainsi la position de l'élément d'identification (30) par rapport à l'élément de fermeture positive d'adaptateur (220) de l'érodeuse.

2. Ensemble de filtre selon la revendication 1, **caractérisé en ce que** l'élément d'identification (30) présente au moins un élément de mémoire conçu pour mémoriser des données spécifiques au filtre et/ou au moins un transpondeur conçu pour recevoir et transmettre des données spécifiques au filtre.

3. Ensemble de filtre selon la revendication 1 ou 2, **caractérisé en ce que** le moyen de raccordement axial à symétrie de révolution (22) de l'entrée de diélectrique (20) est un prolongement de raccordement de tuyau axial, par exemple avec filetage.

4. Ensemble de filtre selon au moins l'une des revendications 1 à 3, **caractérisé en ce que** l'élément d'identification (30), l'entrée de diélectrique (20) et l'élément de fermeture positive d'adaptateur (40) de l'ensemble de filtre (100) sont assignés à un élément d'interface de raccordement (50) de l'ensemble de filtre (100) disposé de manière centrale sur la face frontale (10) de l'ensemble de filtre (100).

5. Ensemble de filtre selon au moins l'une des revendications 1 à 4, **caractérisé en ce qu'un** disque d'extrémité (60) conçu pour recouvrir une première face d'extrémité de l'élément filtrant est disposé sur la face frontale (10) de l'ensemble de filtre (100) et **en ce que** l'élément d'interface de raccordement (50) de l'ensemble de filtre (100) peut être fixé au disque d'extrémité (60) de manière à ne pas être perdu à l'aide d'au moins un moyen de liaison, notamment à l'aide d'au moins un élément de liaison à encliquetage ou d'un élément de liaison à clip.

6. Ensemble de filtre selon au moins l'une des revendications 1 à 5, **caractérisé en ce que** l'élément de fermeture positive d'adaptateur (40) de l'ensemble de filtre (100) présente une face d'extrémité détournée de l'ensemble de filtre (100), la face d'extrémité de l'élément de fermeture positive d'adaptateur (40) de l'ensemble de filtre (100) étant disposée de manière décalée axialement par rapport à la face frontale (10) de l'ensemble de filtre (100) ou par rapport à la surface, détournée de l'ensemble de filtre (100), d'un disque d'extrémité (60) conçu pour recouvrir une face frontale de l'élément de filtre.

7. Ensemble de filtre selon la revendication 6, **caractérisé en ce que** la face d'extrémité de l'élément de fermeture positive d'adaptateur (40) de l'ensemble de filtre (100) présente au moins une autre géométrie de positionnement axial (42), notamment au moins une élévation géométrique axiale (42) disposée sur la face d'extrémité de l'élément de fermeture positive d'adaptateur (40) de l'ensemble de filtre (100) et s'étendant en s'éloignant de l'élément de filtre, par exemple au moins une lettre et/ou au moins un signe mathématique et/ou au moins une forme géométrique, par exemple une étoile ou un triangle.

8. Unité d'interface de filtre (300) pour une érodeuse, comprenant un ensemble de filtre (100) selon au moins l'une des revendications précédentes 1 à 7, ainsi qu'un élément d'interface de raccordement (240) pour une érodeuse, l'élément d'interface de raccordement (240) présentant au moins un élément de raccordement d'alimentation en diélectrique (210) conçu comme élément de raccordement rapide de tuyau, qui est conçu pour raccorder un élément d'alimentation en diélectrique, notamment au moins une conduite d'alimentation, par exemple au moins un tuyau, de l'érodeuse à un moyen de raccordement (22) d'un l'ensemble de filtre (100) conçu pour nettoyer un diélectrique de l'érodeuse, l'élément de raccordement d'alimentation en diélectrique (210) étant disposé au centre de l'élément d'interface de raccordement (240), **caractérisé par**
- au moins un dispositif de lecture (230) conçu pour la lecture sans contact de données d'au moins un élément d'identification (30) de l'ensemble de filtre (100), notamment au moins un lecteur d'identification par radiofréquence, le dispositif de lecture (230) étant disposé à une distance radiale de l'élément de raccordement d'alimentation en diélectrique (210), et
- au moins un élément de fermeture positive d'adaptateur (220) disposé à une distance radiale de l'élément de raccordement d'alimentation en diélectrique (210), l'élément de fermeture positive d'adaptateur (220) de l'érodeuse étant conçu à rendre possible le raccordement de l'érodeuse à l'ensemble de filtre (100), l'élément de fermeture positive d'adaptateur (40) de l'ensemble de filtre (100) pouvant être relié de manière amovible à un élément de fermeture positive d'adaptateur (220) de l'érodeuse, dans une position fermée des éléments de fermeture positive d'adaptateur (20, 220), l'élément de raccordement d'alimentation en diélectrique (210) de l'érodeuse pouvant être raccordé de manière étanche aux fluides à une entrée de diélectrique axiale (20) de l'ensemble de filtre (100), l'élément de fermeture positive d'adaptateur (220) de l'érodeuse étant conçu en tant que contre-élément de l'élément de fermeture positive d'adaptateur (40) de l'ensemble de filtre (100) et l'élément de fermeture positive d'adaptateur (220) de l'érodeuse étant conçu de telle sorte qu'il ne permet la position fermée des éléments de fermeture positive d'adaptateur (40, 220) respectifs que dans une position angulaire définie et fixe ainsi la position du dispositif de lecture (230) par rapport à l'élément de fermeture positive d'adaptateur (40) de l'ensemble de filtre (100).

9. Unité d'interface de filtre selon la revendication 8, **caractérisée en ce que**
- l'élément d'identification (30), l'entrée de diélectrique (20) et l'élément de fermeture positive d'adaptateur (40) de l'ensemble de filtre (100) sont assignés à l'élément d'interface de raccordement (50) de l'ensemble de filtre (100) disposé de manière centrale sur la face frontale (10) de l'ensemble de filtre (100),
- l'élément de fermeture positive d'adaptateur (220) de l'érodeuse est assigné à l'élément d'interface de raccordement (240) de l'érodeuse et
- l'élément d'interface de raccordement (50) de l'ensemble de filtre (100) et l'élément d'interface de raccordement (240) de l'érodeuse sont conçus pour s'enclencher l'un dans l'autre par un déplacement axial le long d'une course de déplacement définie, un enclenchement des éléments d'interface de raccordement (50, 240) respectifs étant seulement possible lorsque l'élément de fermeture positive d'adaptateur (40) de l'ensemble de filtre (100) et l'élément de fermeture positive d'adaptateur (220) de l'érodeuse s'engagent l'un dans l'autre.

10. Unité d'interface de filtre selon la revendication 8 ou 9, **caractérisée en ce que** l'élément de fermeture positive d'adaptateur (40) de l'ensemble de filtre (100) et l'élément de fermeture positive d'adaptateur (220) de l'érodeuse étant conçus de telle sorte qu'ils ne permettent la position fermée des éléments de fermeture positive d'adaptateur (40, 220) respectifs que dans une position angulaire définie et fixent ainsi la position de l'élément d'identification (30) par rapport au dispositif de lecture (230).

11. Unité d'interface de filtre selon au moins l'une des revendications 8 à 10, **caractérisée en ce que** l'élément d'interface de raccordement (240) de l'érodeuse présente l'élément de raccordement d'alimentation en diélectrique (210), l'élément de raccordement d'alimentation en diélectrique (210) étant notamment un élément de raccordement de tuyau.

12. Unité d'interface de filtre selon au moins l'une des revendications 8 à 11, **caractérisée en ce que** l'élément de fermeture positive d'adaptateur (40) de l'ensemble de filtre (100) présente au moins une autre géométrie de positionnement axiale (42) qui coopère de telle sorte avec une géométrie de positionnement axiale (222), conçue en tant qu'évidement, de l'élément de fermeture positive d'adaptateur (220) de l'érodeuse, que, dans la position fermée de l'élément de fermeture positive d'adaptateur (40) de l'ensemble de filtre (100) et de l'élément de fermeture positive d'adaptateur (220) de l'érodeuse, la géométrie de positionnement (42) de l'ensemble de filtre s'engage à travers la géométrie de positionnement (222) de l'érodeuse et peut être palpée de l'extérieur.
